# EUROPEAN PATENT APPLICATION

(11) **EP 2 505 793 A1**
(43) Date of publication of application: **03.10.2012**
(21) Application number: 10833150.5
(22) Date of filing: 19.11.2010
(51) Int. Cl.: F01K 23/10, B63J 3/02, B63J 3/04, F01D 15/04, F01K 15/04, F02B 73/00, F02G 5/02

(54) **STEAM TURBINE POWER GENERATION SYSTEM AND SHIP PROVIDED WITH SAME**

(30) Priority: 26.11.2009 JP 2009269196
(71) Applicant: Mitsubishi Heavy Industries, Ltd., Tokyo 108-8215 (JP)
(72) Inventor: SHIRAISHI, Keiichi, Tokyo 108-8215 (JP); ICHIKI, Yoshihiro, Tokyo 108-8215 (JP); OKABE, Masahiko, Tokyo 108-8215 (JP); NAMEKAWA, Shouji, Tokyo 108-8215 (JP)
(74) Representative: Henkel, Breuer & Partner
(86) International application number: PCT/JP2010/070681
(87) International publication number: WO 2011/065304

(57) **Abstract**

Provided is a steam turbine power generation system which increases the output obtained from a power generator connected to a steam turbine. The steam turbine power generation system is provided with a two-stroke diesel engine (2), a four-stroke diesel engine (3), a first boiler (4A) to which exhaust gas discharged from the two-stroke diesel engine (2) is introduced to generate steam, a second boiler (4B) to which exhaust gas discharged from the four-stroke diesel engine (3) is introduced to generate steam, a steam turbine (5) to which the steam generated from the boilers (4A, 4B) is introduced, and a power generator (6) for a steam turbine, which is connected to the steam turbine (5) and which generates power by rotating and driving the steam turbine (5).

## Description

### {Technical Field}

The present invention relates to a steam turbine power-generating system and to a ship including the same.

### {Background Art}

In general, a large ship includes a two-stroke diesel engine for propulsion and a four-stroke diesel engine for power generation. The flow rate of exhaust gas exhausted from a two-stroke diesel engine is greater than that from a four-stroke diesel engine. Thus, a steam turbine power-generating system that generates steam by guiding the exhaust gas exhausted from the two-stroke diesel engine to an exhaust gas boiler, by rotationally driving a steam turbine by guiding the generated steam to the steam turbine, and by generating power at a generator connected to the steam turbine is used.
PTL 1 discloses power generation using the thermal energy of exhaust gas exhausted from a two-stroke diesel engine.

### {Citation List}

### {Patent Literature}

{PTL 1}
   Japanese Translation of PCT International Application, Publication No. 2009-532614

### {Summary of Invention}

### {Technical Problem}

However, the temperature of the exhaust gas exhausted from the two-stroke diesel engine is, for example, 200 °C to 300 °C. Hence, when generating steam using the thermal energy of the exhaust gas, the temperature of the generated steam cannot be increased above this. Thus, the efficiency of the steam turbine to which the steam is guided cannot be improved. There has been a problem in that, since the efficiency of the steam turbine cannot be improved, the electric power that can be collected from the generator connected to the steam turbine cannot be increased.

The present invention has been conceived in light of such circumstances, and an object thereof is to provide a steam turbine power-generating system and a ship including the same that are capable of increasing the amount of electric power acquired from a generator connected to a steam turbine.

### {Solution to Problem}

To solve the problem described above, the steam turbine power-generating system according to the present invention and a ship including the same employ the following solutions.
That is, a steam turbine power-generating system according to a first aspect of the present invention includes a two-stroke diesel engine; a four-stroke diesel engine; a first boiler configured to receive exhaust gas exhausted from the two-stroke diesel engine and generate steam; a second boiler configured to receive exhaust gas exhausted from the four-stroke diesel engine and generate steam; a steam turbine configured to receive the steam generated at the first boiler and the second boiler; and a steam turbine generator configured to generate electric power by virtue of the steam turbine being rotationally driven.

The temperature of the exhaust gas exhausted from the four-stroke diesel engine is higher than the temperature of the exhaust gas exhausted from the two-stroke diesel engine. Hence, in addition to the first boiler that generates steam using heat of the exhaust gas exhausted from the two-stroke diesel engine, the second boiler that generates steam using heat acquired from exhaust gas from the four-stroke diesel engine is provided. Thus, the amount of steam supplied to the steam turbine can be increased. Hence, the amount of electric power from the steam turbine power-generating system can be increased by efficiently using the heat of the exhaust gas exhausted from the four-stroke diesel engine.

A steam turbine power-generating system according to a second aspect of the present invention a two-stroke diesel engine; a four-stroke diesel engine; a first boiler configured to receive exhaust gas exhausted from the two-stroke diesel engine and generate steam; a superheater configured to superheat the steam generated at the first boiler with heat of exhaust gas exhausted from the four-stroke diesel engine; a steam turbine configured to receive the steam superheated by the superheater; and a steam turbine generator configured to generate electric power by virtue of the steam turbine being rotationally driven.

The first boiler that generates steam using the heat of exhaust gas exhausted from the two-stroke diesel engine and the superheater that superheats the steam generated at the first boiler with the heat of the exhaust gas exhausted from the four-stroke diesel engine are provided. Thus, the thermal energy of the steam generated at the first boiler can be further increased and supplied to the steam turbine. Hence, the amount of electric power from the steam turbine power-generating system can be increased by efficiently using the heat of the exhaust gas of the four-stroke diesel engine.

The steam turbine power-generating system according to an aspect of the present invention described above may further include a gas turbine configured to rotationally drive the steam turbine by receiving and being rotationally driven by part of the exhaust gas exhausted from the two-stroke diesel engine.

The gas turbine to which exhaust gas exhausted from the two-stroke diesel engine is guided is provided. Thus, the steam turbine can be rotationally driven as a result of rotationally driving the gas turbine. Hence, the rotational force of the steam turbine can be increased, and the amount of electric power from the steam turbine power-generating system can be increased.

In the steam turbine power-generating system according to an aspect of the present invention described above, part of the exhaust gas that has passed through the second boiler or the superheater may flow into the exhaust gas guided to the first boiler.

Part of the exhaust gas that has passed through the second boiler or the superheater flows into and is supplied to the first boiler. Thus, even when the two-stroke diesel engine is stopped, the exhaust gas exhausted from the four-stroke diesel engine can be guided to the first boiler, where steam can be generated. Hence, even when the two-stroke diesel engine is stopped, electric power generation can be performed by driving the steam turbine power-generating system.

A ship according to a third aspect of the present invention includes one of the above-described steam turbine power-generating system; a generator for a four-stroke diesel engine connected to and driven by the four-stroke diesel engine; a propulsion shaft rotationally driven as a result of the two-stroke diesel engine being driven; and a propeller disposed on the propulsion shaft and configured to generate a propulsion force.

The thermal energy of exhaust gas exhausted from the four-stroke diesel engine can be efficiently used, and the amount of electric power from the steam turbine power-generating system can be increased. Thus, the amount of electric power generated in the ship can be increased. Hence, the ship can be highly effective in energy conservation.

The ship according to the third aspect of the present invention may further include a motor disposed on the propulsion shaft and electrically connected to electric power generated by the generator for the four-stroke diesel engine and electric power generated by the steam turbine generator.

The motor that is connected to and driven by the four-stroke diesel engine and that is electrically connected to the steam turbine generator is disposed on the propulsion shaft. Thus, even when the two-stroke diesel engine is stopped, electric power can be supplied to the motor. Hence, even when the two-stroke diesel engine is stopped, the ship can be operated by rotationally driving the propeller, which is disposed on the propulsion shaft, with the motor.

### {Advantageous Effects of Invention}

According to the present invention, in addition to the first boiler that generates steam using heat of the exhaust gas exhausted from the two-stroke diesel engine, the second boiler that generates steam using heat acquired from the exhaust gas from the four-stroke diesel engine is provided. Thus, the amount of steam supplied to the steam turbine can be increased. Hence, the amount of electric power from the steam turbine power-generating system can be increased by efficiently using the heat of the exhaust gas from the four-stroke diesel engine.

### {Brief Description of Drawings}

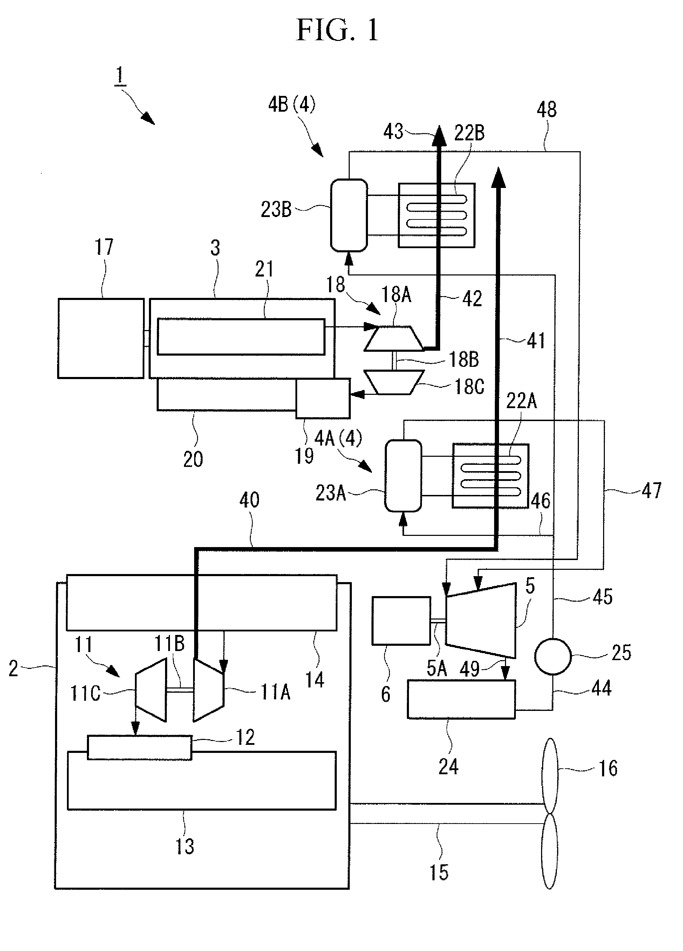

{Fig. 1}
   Fig. 1 is a schematic configuration diagram of a ship including a steam turbine power-generating system according to a first embodiment of the present invention.
{Fig. 2}
   Fig. 2 is a schematic configuration diagram of a ship including a steam turbine power-generating system according to a second embodiment of the present invention.
{Fig. 3}
   Fig. 3 is a schematic configuration diagram of a ship including a steam turbine power-generating system according to a third embodiment of the present invention.
{Fig. 4}
   Fig. 4 is a schematic configuration diagram of a ship including a steam turbine power-generating system according to a fourth embodiment of the present invention.
{Fig. 5}
   Fig. 5 is a schematic configuration diagram of a ship including a steam turbine power-generating system according to a fifth embodiment of the present invention.

### {Description of Embodiments}

### First Embodiment

A first embodiment of the present invention will be described below with reference to Fig. 1.
Fig. 1 is a schematic configuration diagram of a ship including a steam turbine power-generating system according to this embodiment.
A steam turbine power-generating system 1 is installed in an engine room (not shown) provided below deck in a ship.
The steam turbine power-generating system 1 includes a main engine (two-stroke diesel engine) 2 for propulsion, an auxiliary engine (four-stroke diesel engine) 3 for power generation, an exhaust-gas boiler 4 to which exhaust gas exhausted from the main engine 2 or the auxiliary engine 3 is guided, a steam turbine 5 to which the steam generated at the exhaust-gas boiler 4 is guided, and a steam turbine generator 6 driven by the steam turbine 5.

The main engine 2 is a two-stroke diesel engine. The main engine 2 is connected, at the stern side thereof, to a propulsion shaft 15. The main engine 2 rotationally drives a propeller 16, which is disposed at the opposite end of the propulsion shaft 15, by rotationally driving the propulsion shaft 15. The ship achieves propulsion by virtue of the propeller 16 being rotationally driven. The main engine 2 includes a supercharger 11, an air cooler 12, a scavenging chamber 13, and an exhaust-gas collecting pipe 14.

The supercharger 11 is disposed outside the main body of the main engine 2. The supercharger 11 compresses air and supplies this to the main body of the main engine 2. The supercharger 11 includes a turbine 11A and a compressor 11C disposed on a rotary shaft 11B connected to the turbine 11A. The turbine 11A is rotationally driven by exhaust gas exhausted from the main body of the main engine 2. The compressor 11C compresses the air by virtue of the rotary shaft 11B, which is connected to the turbine 11A, being rotationally driven by the rotationally-driven turbine 11A.

The air cooler 12 is disposed outside the main body of the main engine 2. The air cooler 12 increases the specific gravity of air by cooling the air and supplies this to the main body of the main engine 2. The air cooler 12 performs heat exchange between air and, for example, pure water to reduce the temperature of the air.
The scavenging chamber 13 temporarily retains air that has been compressed by the supercharger 11 and whose specific gravity has been increased by the air cooler 12.
The exhaust-gas collecting pipe 14 collects and temporarily retains exhaust gas exhausted from cylinders (not shown) disposed in the main body of the main engine 2.

The propeller 16 is disposed at the opposite end of the propulsion shaft 15. The propeller 16 is rotationally driven by virtue of the propulsion shaft 15 being rotationally driven by the main engine 2. A propulsion force is generated at the ship by rotating the propeller 16.

The auxiliary engine 3 is a four-stroke diesel engine. The auxiliary engine 3 includes a supercharger 18, an air cooler 19, an air-supply manifold 20, and an exhaust-gas collecting pipe 21. The auxiliary engine 3 is connected to an auxiliary generator (generator for four-stroke diesel engine) 17.
The auxiliary generator 17 is driven as a result of operating the auxiliary engine 3 and generates electricity.

The supercharger 18 is disposed outside the main body of the auxiliary engine 3. The supercharger 18 compresses air and supplies this to the main body of the auxiliary engine 3. The supercharger 18 includes a turbine 18A and a compressor 18C disposed on a rotary shaft 18B connected to the turbine 18A. The turbine 18A is rotationally driven by exhaust gas exhausted from the auxiliary engine 3. The compressor 18C compresses the air by virtue of the rotary shaft 18B being rotationally driven by the rotationally-driven turbine 18A.

The air cooler 19 is disposed outside the main body of the auxiliary engine 3. The air cooler 19 increases the specific gravity of air by cooling air and supplies this to the main body of the auxiliary engine 3. The air cooler 19 performs heat exchange between air and, for example, pure water to reduce the temperature of the air.
The air-supply manifold 20 temporarily retains the air that has been compressed by the supercharger 18 and whose specific gravity has been increased by the air cooler 19.
The exhaust-gas collecting pipe 21 collects and temporarily retains exhaust gas from cylinders (not shown) disposed in the main body of the auxiliary engine 3.

The exhaust-gas boiler 4 includes two units 4A and 4B. The exhaust-gas boilers 4A and 4B generate steam by using the thermal energy of the exhaust gas guided thereto. The exhaust-gas boilers 4A and 4B include water pipes 22A and 22B and steam drums 23A and 23B. Water is guided to the water pipes 22A and 22B from the steam drums 23A and 23B. Water is supplied to the steam drums 23A and 23B. The water guided to the water pipes 22A and 22B from the steam drums 23A and 23B is converted to steam as a result of heat exchange with the exhaust gas passing through the exhaust-gas boilers 4A and 4B.

The steam turbine 5 is rotationally driven as a result of the steam being guided thereto. The steam that rotationally drives the steam turbine 5 is guided to a condenser 24. The steam turbine 5 is connected to the rotary shaft 5A. The steam turbine generator 6 is connected to the opposite end of the rotary shaft 5A.
The condenser 24 condenses the steam guided from the steam turbine 5 and returns it to saturated water.
The steam turbine generator 6 generates electricity as a result of the rotary shaft 5A connected to the steam turbine 5 being rotationally driven.

Next, the method of operating the main engine 2, the flow of exhaust gas exhausted from the main engine 2, the method of operating the auxiliary engine 3, and the flow of exhaust gas exhausted from the auxiliary engine 3 will be described.
The supercharger 11 installed in the main engine 2 compresses air as a result of being rotationally driven. The air compressed by the supercharger 11 is guided to the air cooler 12. The compressed air guided to the air cooler 12 exchanges heat with the pure water at the air cooler 12, and its temperature is decreased. The specific gravity of air is increased in the compressed air having a decreased temperature by heat exchange at the air cooler 12. The compressed air having an increased specific gravity is guided to the scavenging chamber 13. The compressed air having an increased specific gravity and guided to the scavenging chamber 13 is combusted at the main engine 2 together with fuel supplied to the main engine 2.

The air and fuel combusted at the main engine 2 are exhausted to the exhaust-gas collecting pipe 14 as exhaust gas having a temperature, for example, between 200 °C and 300 °C. The exhaust gas exhausted to the exhaust-gas collecting pipe 14 is guided to the turbine 11A of the supercharger 11. The exhaust gas guided to the turbine 11A rotationally drives the turbine 11A. The exhaust gas that has rotationally driven the turbine 11A is guided to a pipe 40.

The exhaust gas exhausted from the main engine 2 is guided to the pipe 40 via the supercharger 11. The exhaust gas guided to the pipe 40 is guided into the exhaust-gas boiler (first boiler) 4A. The exhaust gas guided into the exhaust-gas boiler 4A exchanges heat with the water inside a water pipe 22A disposed in the exhaust-gas boiler 4A. The exhaust gas whose temperature has been decreased by heat exchange with the water in the water pipe 22A is guided to a pipe 41 connected to the downstream side of the exhaust-gas boiler 4A. The exhaust gas guided to the pipe 41 is guided to a combined exhaust-gas pipe (not shown) disposed inside the engine room.

The supercharger 18 installed in the auxiliary engine 3 compresses air as a result of being rotationally driven. The air compressed by the supercharger 18 is guided to the air cooler 19. The compressed air guided to the air cooler 19 exchanges heat with pure water at the air cooler 19, and its temperature decreases. The specific gravity of air is increased in the compressed air having a decreased temperature by heat exchange at the air cooler 19. The compressed air having increased specific gravity is guided to the air-supply manifold 20. The compressed air having increased specific gravity and guided to the air-supply manifold 20 is combusted at the auxiliary engine 3 together with fuel supplied to the auxiliary engine 3.

The air and fuel combusted at the auxiliary engine 3 is exhausted to the exhaust-gas collecting pipe 21 as exhaust gas having a temperature, for example, between 250 °C and 350 °C. The exhaust gas exhausted to the exhaust-gas collecting pipe 21 is guided to the turbine 18A of the supercharger 18. The exhaust gas guided to the turbine 18A rotationally drives the turbine 18A. The exhaust gas that has rotationally driven the turbine 18A is guided to a pipe 42.
As a result of the auxiliary engine 3 being operated, the auxiliary generator 17 connected to the auxiliary engine 3 generates electricity.

The exhaust gas guided to the pipe 42 is guided into the exhaust-gas boiler (second boiler) 4B. The exhaust gas guided into the exhaust-gas boiler 4B exchanges heat with the water inside a water pipe 22B disposed in the exhaust-gas boiler 4B. The temperature of the exhaust gas exhausted from the auxiliary engine 3 is approximately 50 °C higher than the temperature of the exhaust gas exhausted from the main engine 2. Thus, the exhaust-gas boiler 4B to which the exhaust gas of the auxiliary engine 3 is guided can generate steam having a higher temperature than that generated by the exhaust-gas boiler 4A to which the exhaust gas of the main engine 2 is guided.
The exhaust gas whose temperature is decreased by heat exchange with the water in the water pipe 22B is guided to a pipe 43 connected to the downstream side of the exhaust-gas boiler 4B. The exhaust gas guided to the pipe 43 is guided to a collective exhaust-gas pipe (not shown) disposed inside the engine room.

The water supply to the exhaust-gas boilers 4A and 4B and the flow of steam generated at the exhaust-gas boilers 4A and 4B will be described below.
A pipe 44 is connected to the downstream side of the condenser 24. A water supply pump 25 is connected to the downstream side of the pipe 44. Water is supplied to the pipe 44 from a main water-supply pipe (not shown) in the engine room. A pipe 45 is connected to the downstream side of the water supply pump 25. Water guided to the water supply pump 25 from the pipe 44 is pressurized at the water supply pump 25 and is guided to the pipe 45. Part of the water guided to the pipe 45 branches off and is guided to a pipe 46 connected to the exhaust-gas boiler 4A. The water guided to the exhaust-gas boiler 4A through the pipe 46 is stored in a steam drum 23A.

The water in the steam drum 23A is guided to the water pipe 22A. The water guided to the water pipe 22A is converted to steam by the thermal energy of the exhaust gas passing through the exhaust-gas boiler 4A. The steam generated as a result of heat exchange with exhaust gas at the water pipe 22A is guided to a pipe 47 connected to the exhaust-gas boiler 4A. The steam guided to the pipe 47 is guided to the steam turbine 5.

In contrast, the downstream side of the pipe 45 is connected to the exhaust-gas boiler 4B. The water guided to the exhaust-gas boiler 4B through the pipe 45 is stored in a steam drum 23B.
The water in the steam drum 23B is guided to the water pipe 22B. The water guided to the water pipe 22B is converted to steam by using the thermal energy of the exhaust gas passing through the exhaust-gas boiler 4B. The steam generated as a result of heat exchange with exhaust gas at the water pipe 22B is guided to a pipe 48 connected to the exhaust-gas boiler 4B. The steam guided to the pipe 48 is guided to the steam turbine 5.

The steam guided to the steam turbine 5 through the pipe 47 and the pipe 48 drives the steam turbine 5. At this time, the temperature of the steam guided to the steam turbine 5 from the pipe 48 is higher than that of the steam guided to the steam turbine 5 from the pipe 47 because it is generated by the exhaust gas guided from the auxiliary engine 3. As a result of driving the steam turbine 5 with the steam, the rotary shaft 5A connected to the steam turbine 5 is rotationally driven. Since the rotary shaft 5A is rotationally driven, the steam turbine generator 6 disposed on the rotary shaft 5A generates electricity.

The steam that has driven the steam turbine 5 is guided to a pipe 49. The steam guided to the pipe 49 is guided to the condenser 24. The steam guided to the condenser 24 is condensed at the condenser 24 and is guided to the pipe 44 as low-temperature water. The water guided to the pipe 44 is pressurized at the water supply pump 25 and is guided to the pipe 45. In this way, the circulation of water and steam is repeated.

As described above, the steam turbine power-generating system according to this embodiment and a ship including the same have the following advantages.
In addition to the exhaust-gas boiler (first boiler) 4A, which generates steam using the heat of exhaust gas exhausted from the main engine (two-stroke diesel engine) 2, the exhaust-gas boiler (second boiler) 4B, which generates steam using the heat acquired from the exhaust gas exhausted from the auxiliary engine (four-stroke diesel engine) 3 is provided. Thus, the amount of steam supplied to the steam turbine 5 can be increased. Hence, the amount of electric power from the steam turbine power-generating system 1 can be increased by efficiently using the heat of exhaust gas exhausted from the auxiliary engine 3.

The amount of electric power from the steam turbine power-generating system 1 can be increased by efficiently using the thermal energy of exhaust gas exhausted from the auxiliary engine 3. Thus, the amount of electric power generated in the ship can be increased. Hence, the ship can be highly effective in energy conservation.

### Second Embodiment

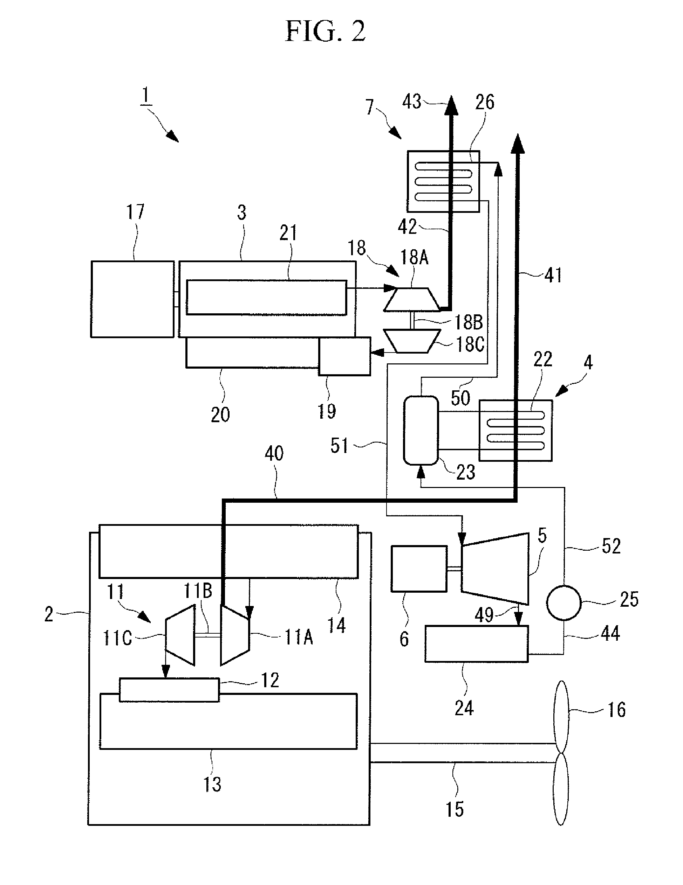

A second embodiment of the present invention will be described below with reference to Fig. 2.
A steam turbine power-generating system according to this embodiment and a ship including the same differ from those according to the first embodiment in that a superheater is included. Other components are the same. Thus, the same configurations, operation method of the diesel engines, and the flow of exhaust gas, water supply, and steam are represented with the same reference numerals, and descriptions thereof are omitted.

The pipe 42 to which exhaust gas exhausted from the auxiliary engine (four-stroke diesel engine) 3 of the steam turbine power-generating system 1 is guided is connected to a superheater 7.
The superheater 7 superheats steam guided to the superheater 7 using the heat of the exhaust gas. The superheater 7 includes the steam pipe 26 in the interior thereof. Steam is guided from a pipe 50, which is described below, to the steam pipe 26. Exhaust gas from the pipe 42 connected to the superheater 7 is guided into the superheater 7. The exhaust gas, which has a temperature, for example, between 250 °C and 350 °C, is guided into the superheater 7 and exchanges heat with the steam guided into the steam pipe 26. The thermal energy of the exhaust gas is imparted to the steam by heat exchange between the exhaust gas and the steam at the superheater 7. The steam to which the thermal energy has been imparted becomes superheated steam.

The flow of exhaust gas, steam, and supply water is described below.
The water pressurized at the water supply pump 25 is guided to a pipe 52. The water guided to the pipe 52 is guided to the exhaust-gas boiler (first boiler) 4. The water guided to the exhaust-gas boiler 4 is stored inside the steam drum 23. The water inside the steam drum 23 is guided to the water pipe 22. The water guided to the water pipe 22 is converted to steam by the thermal energy of the exhaust gas that flows through the exhaust-gas boiler 4 and is exhausted from the main engine 2. The steam generated by heat exchange with exhaust gas at the water pipe 22 is guided to the pipe 50 connected to the exhaust-gas boiler 4. The steam guided to the pipe 50 is guided to the superheater 7.

The exhaust gas exhausted from the auxiliary engine 3 is guided into the superheater 7 from the pipe 42. The exhaust gas guided into the superheater 7 exchanges heat with the steam guided to the steam pipe 26 of the superheater 7 through the pipe 50. The steam that has exchanged heat with the exhaust gas at the steam pipe 26 becomes high-temperature, superheated steam. The superheated steam is guided to a pipe 51 connected to the steam pipe 26 of the superheater 7. The superheated steam guided to the pipe 51 is supplied to the steam turbine 5.

As described above, the steam turbine power-generating system according to this embodiment and a ship including the same have the following advantages.
The exhaust-gas boiler (first boiler) 4, which generates steam by using the heat of exhaust gas exhausted from the main engine (two-stroke diesel engine) 2, and the superheater 7, which superheats steam generated at the exhaust-gas boiler 4 with the heat of exhaust gas exhausted from the auxiliary engine (four-stroke diesel engine) 3, are provided. Thus, the thermal energy of the steam generated at the exhaust-gas boiler 4 can be increased, and then the steam can be supplied to the steam turbine 5. Hence, the heat of exhaust gas of the auxiliary engine 3 can be efficiently used, and the amount of electric power from the steam turbine power-generating system 1 can be increased.

### Third Embodiment

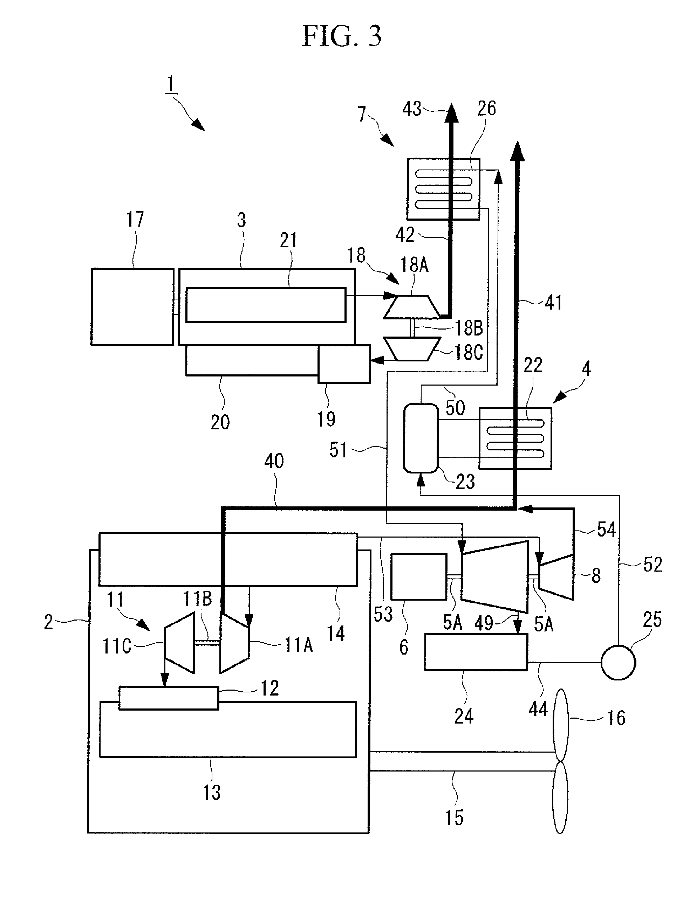

A third embodiment of the present invention will be described below with reference to Fig. 3.
A steam turbine power-generating system according to this embodiment and a ship including the same differ from that according to the first embodiment in that a superheater is included. Other components are the same. Thus, the same configurations, operation method of the diesel engines, and the flow of exhaust gas, water supply, and steam are represented with the same reference numerals, and descriptions thereof are omitted.

The pipe 42 to which exhaust gas exhausted from the auxiliary engine (four-stroke diesel engine) 3 of the steam turbine power-generating system 1 is guided is connected to the superheater 7.
The superheater 7 superheats steam guided to the superheater 7 using the heat of the exhaust gas. The superheater 7 includes a steam pipe 26 in the interior thereof. Steam is guided from the pipe 50, which is described below, to the steam pipe 26. Exhaust gas from the pipe 42 connected to the superheater 7 is guided into the superheater 7. The exhaust gas, which has a temperature, for example, between 250 °C and 350 °C, is guided into the superheater 7 and exchanges heat with the steam guided into the steam pipe 26. The thermal energy of the exhaust gas is imparted to the steam through heat exchange between exhaust gas and steam at the superheater 7. The steam to which the thermal energy has been imparted becomes superheated steam.
The end of the rotary shaft 5A of the steam turbine 5 opposite to the end to which the steam turbine generator 6 is connected is connected to a gas turbine 8.

The flow of exhaust gas, steam, and supply water is described below.
The exhaust gas exhausted from the main engine (two-stroke diesel engine) 2 is guided to the pipe 40 via the supercharger 11. Part of the exhaust gas stored in the exhaust-gas collecting pipe 14 of the main engine 2 is guided to a pipe 53 connected to the gas turbine 8.
The exhaust gas of the main engine 2, guided to the gas turbine 8 through the pipe 53, rotationally drives the gas turbine 8. As a result of the gas turbine 8 being rotationally driven, the steam turbine 5 and the steam turbine generator 6 disposed on the rotary shaft 5A are rotationally driven.
The exhaust gas guided to the gas turbine 8 rotationally drives the gas turbine 8 and is then guided to a pipe 54. The exhaust gas guided to the pipe 54 flows into the pipe 40 and is guided to the exhaust-gas boiler 4 (first boiler).

The water pressurized by the water supply pump 25 is guided to the pipe 52. The water guided to the pipe 52 is guided to the exhaust-gas boiler 4. The water guided to the exhaust-gas boiler 4 is stored in the steam drum 23. The water in the steam drum 23 is guided to a water pipe 22. The water in the water pipe 22 is converted to steam by the thermal energy of the exhaust gas passing through the exhaust-gas boiler 4. The steam generated by heat exchange with the exhaust gas at the water pipe 22 is guided to the pipe 50 connected to the exhaust-gas boiler 4. The steam guided to the pipe 50 is guided to the superheater 7.

The exhaust gas exhausted from the auxiliary engine 3 is guided into the superheater 7 through the pipe 42. The exhaust gas guided into the superheater 7 exchanges heat with the steam guided into the steam pipe 26 connected to the pipe 50. The steam that exchanges heat with the exhaust gas at the steam pipe 26 becomes high-temperature, superheated steam. The superheated steam is guided to the pipe 51 connected to the steam pipe 26. The superheated steam guided to the pipe 51 is supplied to the steam turbine 5.

In addition to the rotational driving by superheated steam, the rotational driving by the above-described gas turbine 8 is also applied to the steam turbine 5. The steam turbine generator 6 disposed on the rotary shaft 5A of the steam turbine 5 is driven by the steam turbine 5 and the gas turbine 8 and generates electricity.

As described above, the steam turbine power-generating system according to this embodiment and a ship including the same provide the following advantages.
Because the gas turbine 8 to which the exhaust gas exhausted from the main engine (two-stroke diesel engine) 2 is guided is provided, the steam turbine 5 can be rotationally driven as a result of driving the gas turbine 8.
Hence, the rotational force of the steam turbine 5 can be increased, and the amount of electric power from the steam turbine power-generating system 1 can be increased.

### Fourth Embodiment

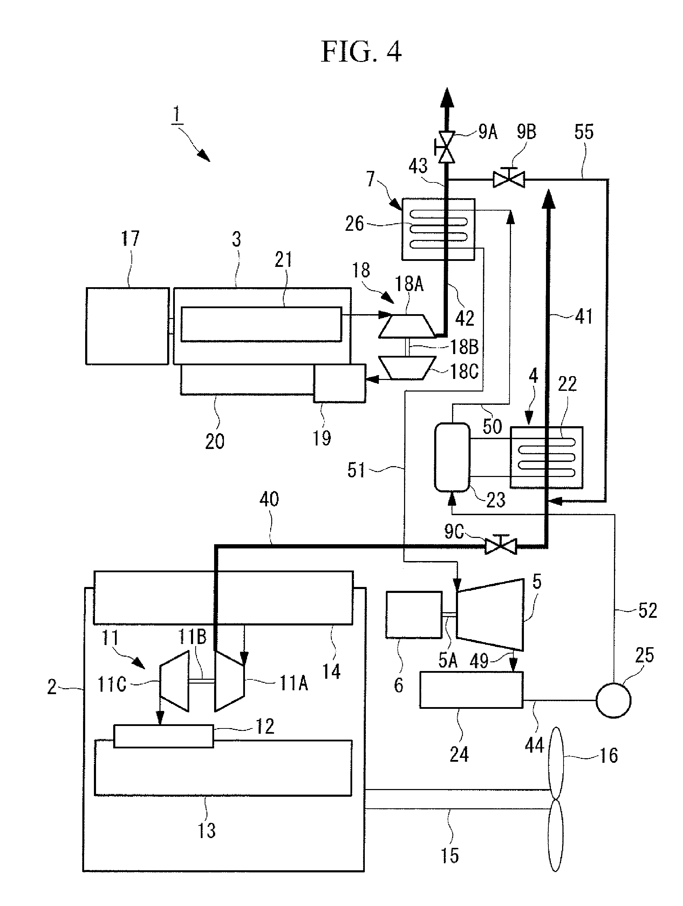

A fourth embodiment of the present invention will be described below with reference to Fig. 4.
A steam turbine power-generating system according to this embodiment and a ship including the same differ from those according to the first embodiment in that a superheater and on/off valves are included. Other components are the same. Thus, the same configurations, operation method of the diesel engines, and the flow of exhaust gas, water supply, and steam are represented with the same reference numerals, and descriptions thereof are omitted.

The pipe 42 to which exhaust gas exhausted from the auxiliary engine (four-stroke diesel engine) 3 of a steam turbine power-generating system 1 is guided is connected to a superheater 7.
The superheater 7 superheats water or steam guided to the superheater 7 using the heat of the exhaust gas. The superheater 7 includes the steam pipe 26 in the interior thereof. The steam pipe 26 is connected to the pipe 50, which is described below. Exhaust gas from the pipe 42 connected to the superheater 7 is guided into the superheater 7. The exhaust gas, which has a temperature, for example, between 250 °C and 350 °C, is guided into the superheater 7 and exchanges heat with the steam guided into the steam pipe 26. The thermal energy of the exhaust gas is imparted to the water or steam through heat exchange between the exhaust gas and the steam at the superheater 7. The water or steam to which the thermal energy has been imparted becomes steam or superheated steam.

The pipe 43 connected to the downstream side of the superheater 7 is connected to a branching pipe 55. An on/off valve 9A is disposed on the pipe 43 after the point where the branching pipe 55 branches off.
The branching pipe 55 connects the pipe 43 and a pipe 40 connected to the upstream side of an exhaust-gas boiler (first boiler) 4. An on/off valve 9B is disposed upstream of the branching pipe 55.
An on/off valve 9C is disposed upstream of the pipe 40 with which the branching pipe 55 merges.

The operating state of the main engine and the flow of exhaust gas, steam, and supply water are described below.
The operation of the main engine 2 is stopped. Since the operation of the main engine 2 is stopped, exhaust gas is not guided to the pipe 40 from the supercharger 11 or the exhaust-gas collecting pipe 14 of the main engine 2.
The on/off valve 9C disposed on the pipe 40 is closed. As a result of closing the on/off valve 9C, the exhaust gas guided to the exhaust-gas boiler (first boiler) 4 is prevented from flowing backward into the main engine 2.
The on/off valve 9A disposed on the pipe 43 is closed, and the on/off valve 9B disposed on the branching pipe 55 is open.

The water pressurized by the water supply pump 25 is guided to the pipe 52. The water guided to the pipe 52 is guided to the exhaust-gas boiler 4. The water guided to the exhaust-gas boiler 4 is stored in the steam drum 23. The water in the steam drum 23 is guided to the water pipe 22. Since the on/off valve 9C disposed on the pipe 40 is closed, exhaust gas from the auxiliary engine 3 is not guided into the exhaust-gas boiler 4. Thus, the water guided into the exhaust-gas boiler 4 is guided to the pipe 50 through the exhaust-gas boiler 4 without heat exchange. The water guided to the pipe 50 is guided to the superheater 7.

The exhaust gas exhausted from the auxiliary engine 3 is guided into the superheater 7 through the pipe 42. The exhaust gas guided into the superheater 7 exchanges heat at the pipe 50 with the water guided into the steam pipe 26 disposed on the superheater 7. The water that has exchanged heat with the exhaust gas at the steam pipe 26 becomes steam. The steam generated at the superheater 7 is guided to the pipe 51 connected to the steam pipe 26 of the superheater 7. The steam guided to the pipe 51 is supplied to the steam turbine 5.

The exhaust gas whose temperature is decreased by heat exchange at the superheater 7 is guided to the pipe 43. The exhaust gas guided to the pipe 43 is guided to the branching pipe 55 because the on/off valve 9A is closed and the on/off valve 9B is open. The exhaust gas guided to the branching pipe 55 flows into the pipe 40 downstream of the on/off valve 9C disposed on the pipe 40. The exhaust gas guided to the pipe 40 downstream of the on/off valve 9C is guided to the exhaust-gas boiler 4.

The exhaust gas from the auxiliary engine 3 guided to the exhaust-gas boiler 4 from the branching pipe 55 through the pipe 40 exchanges heat with water that has been pressurized by the water supply pump 25 and guided to the water pipe 22 of the exhaust-gas boiler from the pipe 52. The water in the water pipe 22 is converted to steam by the thermal energy of the exhaust gas flowing through the exhaust-gas boiler 4. The steam generated by exchanging heat with the exhaust gas at the water pipe 22 is guided to the pipe 50 connected to the water pipe 22 of the exhaust-gas boiler 4. The steam guided to the pipe 50 is guided to the superheater 7.

The steam guided into the steam pipe 26 of the superheater 7 through the pipe 50 exchanges heat with the exhaust gas guided to the superheater 7 from the auxiliary engine 3 and is superheated to superheated steam. The superheated steam is guided to the pipe 51 connected to the steam pipe 26 of the superheater 7. The superheated steam guided to the pipe 51 is supplied to the steam turbine 5.

As described above, the steam turbine power-generating system according to this embodiment and a ship including the same provide the following advantages.
Part of the exhaust gas passing through the superheater 7 flows into and is supplied to the exhaust-gas boiler (first boiler) 4. Thus, even when the main engine (two-stroke diesel engine) 2 is stopped, the exhaust gas exhausted from the auxiliary engine (four-stroke diesel engine) 3 can be guided to the exhaust-gas boiler 4 to generate steam. Hence, even when the main engine 2 is stopped, the steam turbine power-generating system 1 can be driven to generate power.

In this embodiment, the use of the superheater 7 has been described, but instead, the exhaust-gas boiler (second boiler) may be used.

### Fifth Embodiment

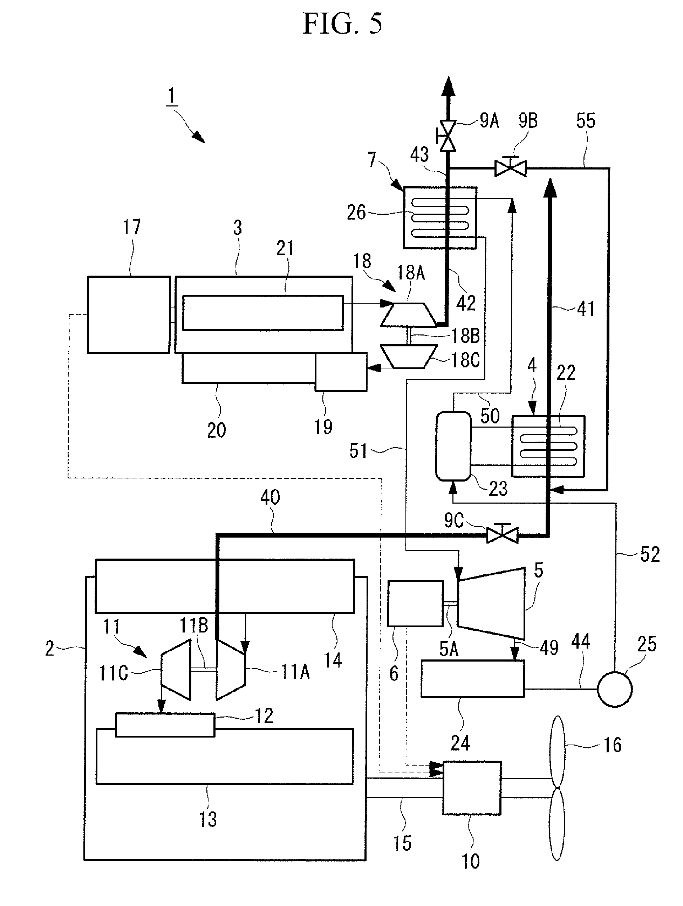

A fifth embodiment of the present invention will be described below with reference to Fig. 5.
A steam turbine power-generating system according to this embodiment and a ship including the same differ from those according to the first embodiment in that a superheater, on/off valves, and a motor are included. Other components are the same. Thus, the same configurations, operation method of the diesel engines, and the flow of exhaust gas, water supply, and steam are represented with the same reference numerals, and descriptions thereof are omitted.

The pipe 42 to which exhaust gas exhausted from the auxiliary engine (four-stroke diesel engine) 3 of the steam turbine power-generating system 1 is guided is connected to the superheater 7.
The superheater 7 superheats water or steam guided to the superheater 7 with the heat of exhaust gas. The superheater 7 includes the steam pipe 26 in the interior thereof. The steam pipe 26 is connected to the pipe 50. Exhaust gas from the pipe 42 connected to the superheater 7 is guided into the superheater 7. The exhaust gas, which has a temperature, for example, between 250 °C and 350 °C, is guided into the superheater 7 and exchanges heat with the steam guided into the steam pipe 26. Thermal energy of the exhaust gas is imparted to the water or steam through heat exchange between the exhaust gas and steam at the superheater 7. The water or steam to which the thermal energy has been imparted becomes steam or superheated steam.

The pipe 43 connected to the downstream side of the superheater 7 is connected to the branching pipe 55. An on/off valve 9A is disposed downstream of the pipe 43 connected to the branching pipe 55.
The branching pipe 55 connects the pipe 43 and the pipe 40 connected to the upstream side of an exhaust-gas boiler (first boiler) 4. The on/off valve 9B is disposed upstream of the branching pipe 55.
The on/off valve 9C is disposed upstream of the pipe 40 with which the branching pipe 55 merges.
A motor 10 is disposed on the propulsion shaft 15. As indicated by the dotted line, the motor 10 is electrically connected to the auxiliary generator 17, which is connected to the auxiliary engine 3, and the steam turbine generator 6, which is connected to the steam turbine 5.

The operating state of the main engine and the flow of exhaust gas, steam, and supply water are described below.
The operation of the main engine 2 is stopped. Since the operation of the main engine 2 is stopped, exhaust gas is not guided to the pipe 40 from the supercharger 11 or the exhaust-gas collecting pipe 14 of the main engine 2.
The on/off valve 9C disposed on the pipe 40 is closed. As a result of closing the on/off valve 9C, the exhaust gas guided to the exhaust-gas boiler 4 is prevented from reversely flowing into the main engine 2.
The on/off valve 9A disposed on the pipe 43 is closed, and the on/off valve 9B disposed on the branching pipe 55 is open.

The water pressurized by the water supply pump 25 is guided to the pipe 52. The water guided to the pipe 52 is guided to the exhaust-gas boiler (first boiler) 4. The water guided to the exhaust-gas boiler 4 is stored in a steam drum 23. The water in the steam drum 23 is guided to the water pipe 22. Since the on/off valve 9C disposed on the pipe 40 is closed, exhaust gas from the main engine 2 is not guided into the exhaust-gas boiler 4. Thus, the water guided into the exhaust-gas boiler 4 is guided to the pipe 50 through the exhaust-gas boiler 4 without heat exchange. The water guided to the pipe 50 is guided to the superheater 7.

The exhaust gas exhausted from the auxiliary engine 3 is guided into the superheater 7 through the pipe 42. The exhaust gas guided into the superheater 7 exchanges heat at the pipe 50 with the water guided into the steam pipe 26 disposed on the superheater 7. The water that has exchanged heat with the exhaust gas at the steam pipe 26 becomes steam. The steam is guided to the pipe 51 connected to the steam pipe 26 of the superheater 7. The steam guided to the pipe 51 is supplied to the steam turbine 5.

The exhaust gas whose temperature is decreased by heat exchange at the superheater 7 is guided to the pipe 43. The exhaust gas guided to the pipe 43 is guided to the branching pipe 55 because the on/off valve 9A is closed and the on/off valve 9B is open. The exhaust gas guided to the branching pipe 55 flows into the pipe 40 downstream of the on/off valve 9C. The exhaust gas guided to the pipe 40 is guided to the exhaust-gas boiler 4.

The exhaust gas of the auxiliary engine 3 guided to the exhaust-gas boiler 4 from the branching pipe 55 through the pipe 40 exchanges heat with water that has been pressurized by the water supply pump 25 and guided to the water pipe 22 of the exhaust-gas boiler 4 from the pipe 52. The water in the water pipe 22 is converted to steam using the thermal energy of the exhaust gas flowing through the exhaust-gas boiler 4. The steam generated by exchanging heat with the exhaust gas at the water pipe 22 is guided to the pipe 50 connected to the water pipe 22 of the exhaust-gas boiler 4. The steam guided to the pipe 50 is guided to the superheater 7.

The steam guided into the steam pipe 26 of the superheater 7 through the pipe 50 exchanges heat with the exhaust gas guided to the superheater 7 from the auxiliary engine 3 and is superheated to superheated steam. The superheated steam is guided to the pipe 51 connected to the steam pipe 26 of the superheater 7. The superheated steam guided to the pipe 51 is supplied to the steam turbine 5.

Electricity is supplied to the motor 10 disposed on the propulsion shaft 15 from the auxiliary generator 17 connected to the auxiliary engine 3 and the steam turbine generator 6 connected to the steam turbine 5. The motor 10 to which electricity is supplied rotationally drives the propulsion shaft 15. As a result of the propulsion shaft 15 being rotationally driven, the propeller 16 is rotated. The ship achieves propulsion by virtue of the propeller 16 being rotated.

As described above, the steam turbine power-generating system according to this embodiment and a ship including the same provide the following advantages.
The propulsion shaft 15 includes the motor 10, which is electrically connected via the auxiliary generator (generator for four-stroke diesel engine) 17 driven by the auxiliary engine (four-stroke diesel engine) 3 and via the steam turbine generator 6 connected to the steam turbine 5. Thus, even when the main engine (two-stroke diesel engine) 2 is stopped, electric power can be supplied to the motor 10. Hence, even when the main engine 2 is stopped, the propeller 16 disposed on the propulsion shaft 15 can be rotationally driven by the motor 10, and the ship can be operated.

### {Reference Signs List}

- 1: steam turbine power-generating system
- 2: two-stroke diesel engine (main engine)
- 3: four-stroke diesel engine (auxiliary engine)
- 4A: first boiler (exhaust-gas boiler)
- 4B: second boiler (exhaust-gas boiler)
- 5: steam turbine
- 6: steam turbine generator
- 7: superheater

## Claims

1. A steam turbine power-generating system comprising:
a two-stroke diesel engine;
a four-stroke diesel engine;
a first boiler configured to receive exhaust gas exhausted from the two-stroke diesel engine and generate steam;
a second boiler configured to receive exhaust gas exhausted from the four-stroke diesel engine and generate steam;
a steam turbine configured to receive the steam generated at the first boiler and the second boiler; and
a steam turbine generator configured to generate electric power by virtue of the steam turbine being rotationally driven.

2. A steam turbine power-generating system comprising:
a two-stroke diesel engine;
a four-stroke diesel engine;
a first boiler configured to receive exhaust gas exhausted from the two-stroke diesel engine and generate steam;
a superheater configured to superheat the steam generated at the first boiler with heat of exhaust gas exhausted from the four-stroke diesel engine;
a steam turbine configured to receive the steam superheated by the superheater; and
a steam turbine generator configured to generate electric power by virtue of the steam turbine being rotationally driven.

3. The steam turbine power-generating system according to Claim 1 or 2, further comprising:
a gas turbine configured to rotationally drive the steam turbine by receiving and being rotationally driven by part of the exhaust gas exhausted from the two-stroke diesel engine.

4. The steam turbine power-generating system according to one of Claims 1 to 3, wherein part of the exhaust gas that has passed through the second boiler or the superheater flows into the exhaust gas guided to the first boiler.

5. A ship comprising:
the steam turbine power-generating system according to one of Claims 1 to 4;
a generator for a four-stroke diesel engine connected to and driven by the four-stroke diesel engine;
a propulsion shaft rotationally driven as a result of the two-stroke diesel engine being driven; and
a propeller disposed on the propulsion shaft and configured to generate a propulsion force.

6. The ship according to Claim 5, further comprising:
a motor disposed on the propulsion shaft and electrically connected to electric power generated by the generator for the four-stroke diesel engine and electric power generated by the steam turbine generator.
